(19) Europäisches Patentamt
European Patent Office
Office européen des brevets

(11) EP 4 470 691 A1

(12) # EUROPEAN PATENT APPLICATION
published in accordance with Art. 153(4) EPC

(43) Date of publication:
**04.12.2024 Bulletin 2024/49**

(21) Application number: **22924080.9**

(22) Date of filing: **28.11.2022**

(51) International Patent Classification (IPC):
***B21D 28/02*** (2006.01) ***B21D 28/14*** (2006.01)
***B21D 28/34*** (2006.01) ***B21D 33/00*** (2006.01)
***B26F 1/14*** (2006.01) ***B28D 1/32*** (2006.01)

(52) Cooperative Patent Classification (CPC):
**B21D 28/02; B21D 28/14; B21D 28/34; B21D 33/00; B26F 1/14; B28D 1/32;** Y02E 60/10

(86) International application number:
**PCT/JP2022/043666**

(87) International publication number:
**WO 2023/145228 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.01.2022 JP 2022011574**

(71) Applicants:
- **Komatsuseiki Kosakusho Co., Ltd.**
**Suwa-shi, Nagano 392-0012 (JP)**
- **University of Toyama**
**Toyama 930-8555 (JP)**

(72) Inventors:
- **SUZUKI Yohei**
**Suwa-shi Nagano 392-0012 (JP)**
- **ABE Kota**
**Suwa-shi Nagano 392-0012 (JP)**
- **AIZAWA Tatsuhiko**
**Suwa-shi Nagano 392-0012 (JP)**
- **SHIRATORI Tomomi**
**Toyama-shi Toyama 930-8555 (JP)**

(74) Representative: **Klunker IP**
**Patentanwälte PartG mbB**
**Destouchesstraße 68**
**80796 München (DE)**

(54) # METHOD FOR PERFORMING SHEARING WORK ON AMORPHOUS ALLOY FOIL

(57) [Problem] For shearing of amorphous alloy foils, a punch has a cutting edge with a functional shape given in order to achieve both long tool life and quality maintenance.

[Means of Solution] A method for shearing a plurality of layered amorphous alloy foils 28 includes blanking the plurality of amorphous alloy foils 28 with a shear tool having a punch 12 and a die 14 through one descending of the punch 12. The punch 12 has a first edge E1 formed on a tip surface 12a of the punch 12 and a second edge E2 formed on a side peripheral surface 12b of the punch 12. A horizontal distance l between the first edge E1 and the side peripheral surface 12b and a vertical distance h between the second edge E2 and the tip surface 12a are each set in a range of 0.010 mm to 0.050 mm. A vertical distance h is set to 52% or less of the thickness of each amorphous alloy foil 28.

[Fig. 4]

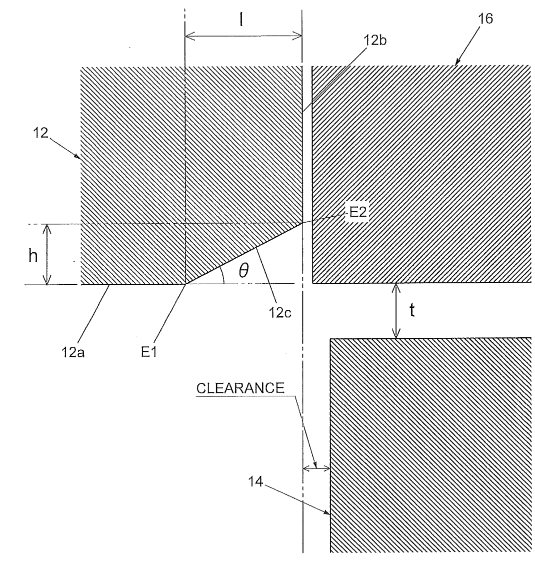


EP 4 470 691 A1

## Description

### Technical Field

The present invention relates to a press-shearing technique for amorphous alloy foils.

### Prior Art

Press-shearing is an extremely productive machining method and is used for a variety of industrial products, including automobile parts and home appliance parts.

Their materials to be used are selected based on the required functions, and for some products, materials featured with high strength and low ductility, which are difficult to machine, are selected.

A typical example is amorphous alloy foils used in transformers and motors. When a tensile test was performed on an amorphous alloy foil, as illustrated in Fig. 1, it was found to have a high tensile strength as high as 2000 MPa or higher while having an elongation of only about 1%. This result indicates that the amorphous alloy foil has high strength but low ductility compared to commonly available materials such as stainless steel, copper, and aluminum.

In the press-shearing of the amorphous alloy foil, there is a problem of ensuring tool life and machining quality.

Generally, a shear load is calculated using the following Equation 1, which indicates that the shear load increases in proportional to the strength of the material. This results in a heavy burden on the tool, increasing the frequency of tool breakage and shortening the tool life due to the progression of wear.

$$\text{Equation 1: } P = Ts \cdot 0.8 \cdot t \cdot l$$

P: Shear load
Ts: Tensile strength of workpiece
t: Thickness of workpiece
l: Shear length

In addition, there are quality problems, such as cracks occurring in punch holes and punched parts due to the low ductility of the material.

A cut surface is composed of a shear droop, a shear surface, and a fracture surface. The shear droop and the shear surface are formed due to the plastic deformation of the material, and the fracture surface is formed due to the fracture of the material.

An amorphous alloy foil, which is a low-ductility material, is not prone to plastic deformation, as illustrated in Fig. 1. Since fracture occurs before plastic deformation occurs or at the stage when plastic deformation is initiated, a shear droop and a shear surface are unlikely to occur.

Therefore, how to concentrate the shear stress in the material to form a shear droop and a shear surface is important in ensuring the quality of the cut surface (no cracks and high dimensional stability).

However, in order to concentrate the shear stress, the tool cutting edge needs to be sharpened to a certain extent, and there is still a problem in achieving both the above-mentioned improvement in tool life and maintaining quality.

[Patent Literature 1] Japanese Patent Application Publication No. 2013-013901
[Patent Literature 2] Japanese Examined Patent Publication No. S53-8388
[Patent Literature 3] Japanese Patent Application Publication No. H8-57557
[Patent Literature 4] Japanese Patent Application Publication No. H10-323723;
[Non-Patent Literature 1] R. Tilsley, Machinery, 93-2383(1953-7), p. 151
[Non-Patent Literature 2] Tsuyoshi Masumoto, Materials Science of Amorphous Metals (1982), Ohmsha, p. 203

### Summary of the Invention

### Problem to be Solved by the Invention

The shape of the tool cutting edge used in shearing typically has a cutting edge angle of 90 degrees (hereinafter referred to as "edge punch") because of various reasons, such as having sharpness and obtaining the desired cut surface. However, the expected results (durability) cannot be obtained with edge punch in some cases, and there are improvements to the shape of the tool cutting edge accordingly.

Examples of the improvements include giving a shear angle to a cutting edge to prevent scrap rising (Patent Literature 1), giving a small roundness to obtain a full shear surface in precision shearing (Non-Patent Literature 1), adopting a press working (PW) punch to improve seizure resistance (Patent Literature 2), and developing a punch with a C-surface or a roundness R (Patent Literatures 3 and 4).

However, there are no patents or papers that describe the critical significance of the functional shape and dimensional range of a tool cutting edge in shearing an amorphous alloy foil.

Incidentally, Patent Literature 3 reports a blanking die for a metal plate with a chamfer of 5% to 20% of the diameter of a punch so as to be free of blank cracks. However, when a punch with a chamfer of 6.5% of the diameter of the punch is actually used to punch holes in layered amorphous alloy foils, the first layer material cracks, so that the expected effect cannot be obtained.

In other words, this phenomenon occurs because the workpiece is an amorphous alloy foil, which is a low-ductility material, and does not correspond to the phenomenon in machining materials commonly used in general press working, such as stainless steel, copper, and aluminum.

With current technology, it is not realistic to mass-produce amorphous alloy foils by press-shearing, and in reality, wire cutting is used instead.

The present invention provides a punch for shearing of amorphous alloy foils, the punch having a cutting edge with a functional shape given in order to achieve both long tool life and quality maintenance.

The functional shape as used herein refers to specifically a shape that can suppress the concentration of stress from the material on the cutting edge of the punch and also a shape in which shear deformation is dominant over bending deformation.

## Means for Solving the Problem

In order to achieve the above-described obj ect, a shear tool as a first aspect of the present invention is a tool used for press-shearing of amorphous alloy foils, and includes a first edge formed on a tip surface of a punch; and a second edge formed on a side surface of the punch, wherein a horizontal (lateral) distance between the first edge and the side surface of the punch and a vertical (longitudinal) distance between the second edge and the tip surface of the punch are optimized to achieve to draw a workpiece into a die and to start shearing the workpiece.

In the shear tool as a second aspect according to the first aspect, the horizontal distance and the vertical distance are each set in a range of 0.010 mm to 0.050 mm.

In the shear tool as a third aspect according to the first or second aspect, the vertical distance is set to 52% or less of a thickness of each amorphous alloy foil.

A shearing method as a fourth aspect includes shearing an amorphous alloy foil using the shear tool according to the first to third aspects.

A shearing method as a fifth aspect includes shearing a plurality of layered amorphous alloy foils at a time using the shear tool according to any one of the first to third aspects.

## Effects of the Invention

According to the present invention, it is possible to efficiently machine an amorphous alloy foil(s), which is a high-strength, low-ductility metal material, by press-shearing, and also to prevent damage to the tool, thereby improving productivity and reducing costs. In addition, it is possible to obtain a quality in which no kink bands or cracks occur in blanking holes and blanking products.

## Brief Description of the Drawings

[Fig. 1]
Fig. 1 is a graph of the relationship between tensile strength and elongation as a result of a tensile test of an amorphous alloy foil.
[Fig. 2]
Fig. 2 is a structural diagram illustrating a configuration of a blanking die according to an embodiment of the present invention.
[Fig. 3]
Fig. 3 includes a diagram illustrating a tip portion of a shear punch according to the embodiment of the present invention, and an SEM photograph of the tip portion.
[Fig. 4]

Fig. 4 is a schematic diagram illustrating the shape of a cutting edge of the punch used in the embodiment of the present invention.

[Fig. 5]

Fig. 5 is a schematic diagram illustrating how five layers are blanked in blanking for electromagnetic steel sheets.

[Fig. 6]

Fig. 6 is a table indicating the configurations of six types of punches used in the embodiment of the present invention.

[Fig. 7]

Fig. 7 shows SEM photographs of the tip corners of the six types of punches before use.

[Fig. 8]

Fig. 8 shows SEM photographs of the tip corners of the six types of punches after machining.

[Fig. 9]

Fig. 9 shows an SEM photograph of the tip corner of punch (2) after 50,000 machining shots.

[Fig. 10]

Fig. 10 is a graph of the results of measuring the shape of the cutting edge of punch (2) before machining and after 50,000 machining shots.

[Fig. 11]

Fig. 11 is a graph of the results of measuring the dimensions of holes machined with the six types of punches every five layers of a stack.

[Fig. 12]

Fig. 12 illustrates the change in hole size in each layer from machining start to 50,000 shots in machining after five-layered amorphous alloy foils are sheared with punch (2).

[Fig. 13]

Fig. 13 shows SEM photographs of the shapes of holes machined with the six types of punches in the first layer of the five-layered amorphous alloy foils.

[Fig. 14]

Fig. 14 shows enlarged SEM photographs of the vicinity of holes machined with the six types of punches in the first layer of the five-layered amorphous alloy foils.

[Fig. 15]

Fig. 15 shows SEM photographs of the shapes of parts machined with the six types of punches in the first layer of the five-layered amorphous alloy foils.

[Fig. 16]

Fig. 16 shows enlarged SEM photographs of the outer periphery of parts machined with six types of punches in the first layer of the five-layered amorphous alloy foils.

[Fig. 17]

Fig. 17 illustrates distribution diagrams of maximum principal stresses at the start of shearing using three types of punches, calculated by finite element analysis.

[Fig. 18]

Fig. 18 illustrates distribution diagrams of maximum principal stresses at the start of shearing using two types of punches, calculated by finite element analysis.

## Preferred Embodiments for Caring out the Invention

An embodiment of the present invention will be described below in detail with reference to the drawings. The present invention is not limited to the present embodiment.

[Configuration of Blanking Die]

Fig. 2 illustrates a blanking die 10 according to the present embodiment, which includes a punch 12, a die 14, a stripper plate 16, a punch plate 18, a back plate 20, springs 22, a die set 24, and guide posts 26.

An object to be machined is placed between the stripper plate 16 and the die 14.

When a pressing force is applied to the punch plate 18 by a press machine (not illustrated), the punch 12 descends and blanks the object to be machined between the punch 12 and the die 14.

Meanwhile, a plate pressing force applied to the stripper plate 16 makes it possible to remove the punch 12 from the workpiece while keeping the object to be machined flat.

In Fig. 3, (a) illustrates the shape of the tip of the punch 12 having a tip surface 12a, a side peripheral surface 12b. Between the tip surface 12a and the side peripheral surface 12b, the punch 12 also has a first edge (corner) E1, an inclined surface 12c, and a second edge (corner) E2 (details will be described later). In Fig. 3, (b) is an SEM photograph of the tip portion of the punch 12.

However, the shape of the punch 12 is not limited to a cylindrical shape.

Fig. 4 is an enlarged cross-sectional view of the tip portion of the punch 12, in which the horizontal distance (width) between the first edge E1 formed on the tip surface 12a of the punch 12 and the side peripheral surface 12b of the punch 12 is defined as l, the vertical distance (height) between the second edge E2 formed on the side peripheral surface 12b of the punch 12 and the tip surface 12a of the punch 12 is defined as h, and the exterior angle between the inclined surface 12c connecting the edges E1 and E2 and the tip surface 12a is defined as $\theta$.

In the figure, t represents the thickness of a workpiece.

As illustrated in Fig. 5, an object to be machined 28 (with a total thickness of 125 $\mu$m) made of five-layered amorphous alloy foils 28a to 28e (each with a thickness of 25 $\mu$m), which are high-strength, low-ductility metal materials, was subjected to continuous press blanking by using the blanking die 10 in Fig. 2 and the punch 12 in Fig. 3. Specifically, a plurality of punches 12 with different dimensions l and h were used to compare punch damages and observe the surface condition and dimensions of the blanking products as follows.

Fig. 6 indicates the configurations of six types of punches (1) to (6).

Among these, punch (1) corresponds to a conventional edge punch, which has only one edge, in which $\theta$ is 90 degrees, and l and h are 0 accordingly.

In contrast, punches (2) to (6) each have a first edge and a second edge, and l and h are set to values greater than 0.

For all the conditions, the punch diameter was set to $\phi$2.003 mm and the die diameter was set to $\phi$2.010 mm. The lubrication condition was no lubrication. A cemented carbide was used for each punch, which is a typical material for punches.

Fig. 7 shows SEM photographs of the states of punches (1) to (6) before use, which are each an enlarged view of a boxed area in (b) of Fig. 3.

Fig. 8 shows SEM photographs of the punches after machining.

It was found that punch (1) (edge punch) had a chip on the cutting edge of the punch after 100 machining shots. The same experiment was carried out three times, each in which a chip occurred for approximately the same number of machining shots.

On the other hand, no chips were observed after 1,000 machining shots with punch (2), punch (3), punch (4), and punch (6).

In contrast, with punch (5) which has relatively large l and h, the machining was discontinued after five shots because cracks appeared in the blanking hole at such a machining early stage.

To further evaluate durability, punch (2) was used, which has a cutting edge shape similar to that of the edge punch and which would be most likely to be chipped due to the load placed on the cutting edge of the punch, to perform 50,000 shots of continuous machining.

Fig. 9 shows an SEM photograph of the tip of punch (2) after 50,000 machining shots.

No chips were found, and no significant changes were observed when compared with the SEM photograph before machining.

The wear losses of the cutting edge shaped portion of punch (2) before and after machining were measured with a non-contact three-dimensional measuring machine. As a result, it was found as illustrated in Fig. 10 that the cutting edge shape dimension l before machining was 0.008 mm and after machining it was 0.013 mm, and the cutting edge shape dimension h before machining was 0.010 mm and after machining it was 0.013 mm, that is, a wear loss of only about 5 $\mu$m.

The results shown above lead to that minute removal machining on the cutting edge of the punch can prevent the punch from being chipped.

Next, the hole dimensions were evaluated. Fig. 11 shows the results of measuring the dimensions of the holes in each layer machined with punches (1) to (6).

When punches (2) to (4) were used having a cutting edge shape with l and h of 0.050 mm or less, or when punch (6) was used having l of 0.050 mm, h of 0.013 mm, and $\theta$ of 15 degrees, holes were machined in each layer with an accuracy of within $\pm$0.005 mm in hole dimensions on the basis of the hole size of punch (1) (edge punch).

Fig. 12 shows the results of measuring the hole dimensions in each layer from the machining start to 50,000 shots with punch (2) (l and h = 0.010 mm).

For the first layer, the dimensions did not substantially change from the machining start until 50,000 shots. As described above, this is believed to be due to the fact that the punch was hardly worn, thereby maintaining its sharpness, and the punch diameter remained almost unchanged.

For the second and third layers, the hole dimensions did not substantially change from the first shot until 30,000 shots, but increased at the stage of 50,000 shots.

For the fourth and fifth layers, the dimensions increased as the number of machining shots increased. This is the result of the wear of the die, and is expected to be improved by increasing the hardness of the die material.

Next, the hole shapes were evaluated. Fig. 13 shows the results of SEM observation of the shapes of the holes machined with the six types of punches.

It was found that when punches (2) to (4) were used having a cutting edge shape with l and h of 0.050 mm or less, or when punch (6) was used having l of 0.050 mm, h of 0.013 mm, and $\theta$ of 15 degrees, the shapes of the blanking holes were free of defects including cracks, and the blanking made a shape equivalent to each punch outline shape.

Fig. 14 shows the results of SEM observation of the surface conditions in the vicinity of the holes machined with the six types of punches in the first layer.

No kink bands such as wrinkle were observed on the surface in the vicinity of the holes for punch (1) (edge punch), punch (2) (l and h = 0.010 mm), and punch (6) (l = 0.050 mm, h = 0.013 mm, $\theta$ = 15 degrees).

On the other hand, it was found that kink bands occurred when punches (3), (4), and (5) having cutting edge shapes with l and h of 0.025 mm or more were used.

The blanking parts were then evaluated. Fig. 15 shows SEM photographs of blanking parts when machined with the six types of punches in the first layer. Further, Fig. 16 shows enlarged SEM photographs of the outer periphery of the blanking parts.

It was found that when punches (1) to (4) were used having a cutting edge shape with l and h of 0.050 mm or less, and when punch (6) was used (l = 0.050 mm, h = 0.013 mm, $\theta$ = 15 degrees), the shapes of the blanking holes were free of defects including cracks, and the blanking made a shape equivalent to each punch outline shape.

In contrast, with punch (5) having l and h of 0.125 mm, cracks occurred on the outer periphery.

A kink band is the phenomenon that occurs when a material is bent and deformed (Non-Patent Literature 2). In shearing, it is expected that the cutting edge of a punch wears as the machining progresses, and the edge shape changes to have a roundness R, resulting in bending deformation. However, the boundary conditions for the cutting edge shape and its dimensions have not been clarified.

The boundary conditions for the occurrence or non-occurrence of kink bands depending on the cutting edge shape and its dimensions were verified by finite element analysis (FEM analysis).

Figs. 17 and 18 show the maximum principal stresses at the start of shearing, calculated by FEM analysis, when one layer of amorphous alloy foil (with a thickness of 25 $\mu$m) is machined with five types of punches.

Specifically, in Fig. 17, (a) is for punch (1) (edge punch), (b) is for punch (2) (l and h = 0.010 mm), and (c) is for punch (3) (l and h = 0.025 mm); in Fig. 18, (a) is for punch (6) (l = 0.050 mm, h = 0.013 mm, $\theta$ = 15 degrees), and (b) is for the punch (X) first appeared here (l = 0.025 mm, h = 0.014 mm, $\theta$ = 30).

Shearing has begun for punch (1), punch (2), punch (6), and punch (X), except for punch (3).

Note that, according to the definition of shear deformation, in actual machining, a large shear stress in an area connecting the cutting edge of a punch and the cutting edge of a die causes shear slippage to occur, forming a shear surface. However, shear slippage cannot be identified in FEM analysis.

Therefore, shear deformation as used herein is defined as the deformation of a workpiece along the side surface of a punch, and is the fact that the stress in an area connecting the cutting edge of the punch and the cutting edge of the die (on a line in two-dimensional FEM) is greater than that in the surrounding area.

On the other hand, with punch (3) (l and h = 0.025 mm), only bending deformation occurred and no shear deformation occurred.

The results thus obtained were consistent with the occurrence or non-occurrence of kink bands on the hole surfaces illustrated in Fig. 14.

The boundary conditions for the occurrence or non-occurrence of kink bands can be considered to be the dominance of bending deformation over shear deformation.

Comparing the results for punch (3) ((c) of Fig. 17) and punch (X) ((b) of Fig. 18), it can be seen that the time (distance) from when the first edge E1 comes into contact with the material to when it comes into contact with the second edge E2 is an important factor in terms of dominant shear deformation. In other words, the shorter the time (distance) from when the first edge E1 comes into contact with the material to when it comes into contact with the second edge E2, the more dominant the shear deformation can be.

From the above-described experiments, it was found that, for a cutting edge shape height h within 52% of the material thickness as represented in the following Equation 2, shear deformation is dominant over bending deformation in the deformation mode of the machining, and no kink bands occur on the hole surface.

$$\text{Equation 2: } 0.013 \text{ (h of punch (6))} \div 0.025 \text{ (thickness)} = 0.52$$

**Explanation of References**

12 Punch
12a Tip surface of punch

| | |
|---|---|
| 12b | Side peripheral surface of punch |
| 12c | Inclined surface of punch |
| E1 | First edge |
| E2 | Second edge |
| h | Vertical distance between second edge and tip surface of punch |
| l | Horizontal distance between first edge and side peripheral surface of punch |
| 14 | Die |
| 16 | Stripper plate |
| 18 | Punch plate |
| 20 | Back plate |
| 22 | Spring |
| 24 | Die set |
| 26 | Guide post |
| 28 | Amorphous alloy foils |

## Claims

**1.** A method for shearing a plurality of layered amorphous alloy foils, comprising

blanking the plurality of amorphous alloy foils with a shear tool having a punch and a die through one descending of the punch, wherein
the punch has a first edge formed on a tip surface of the punch and a second edge formed on a side surface of the punch,
a horizontal distance between the first edge and the side surface of the punch and a vertical distance between the second edge and the tip surface of the punch are each set in a range of 0.010 mm to 0.050 mm, and
the vertical distance is set to 52% or less of a thickness of each amorphous alloy foil.

[Fig.1]

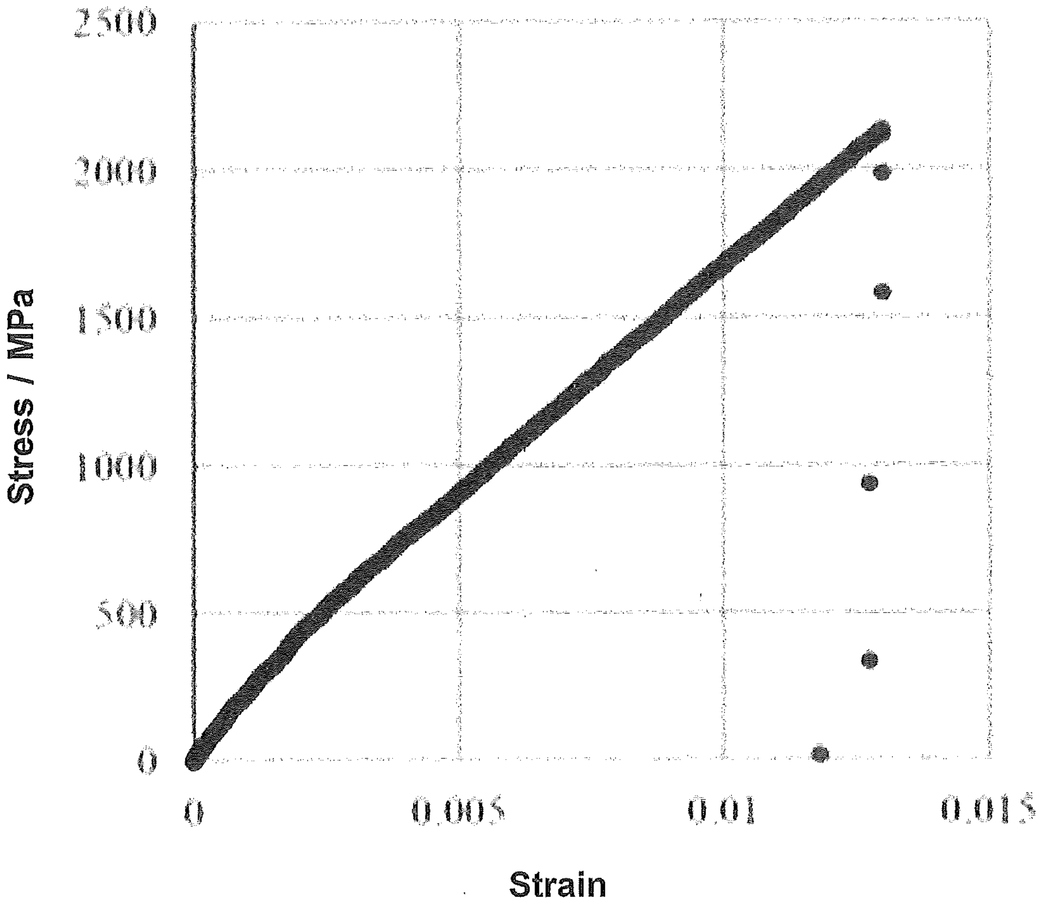
2500
2000
1500
1000
500
0
Stress / MPa
0
0.005
0.01
0.015
Strain

[Fig.2]

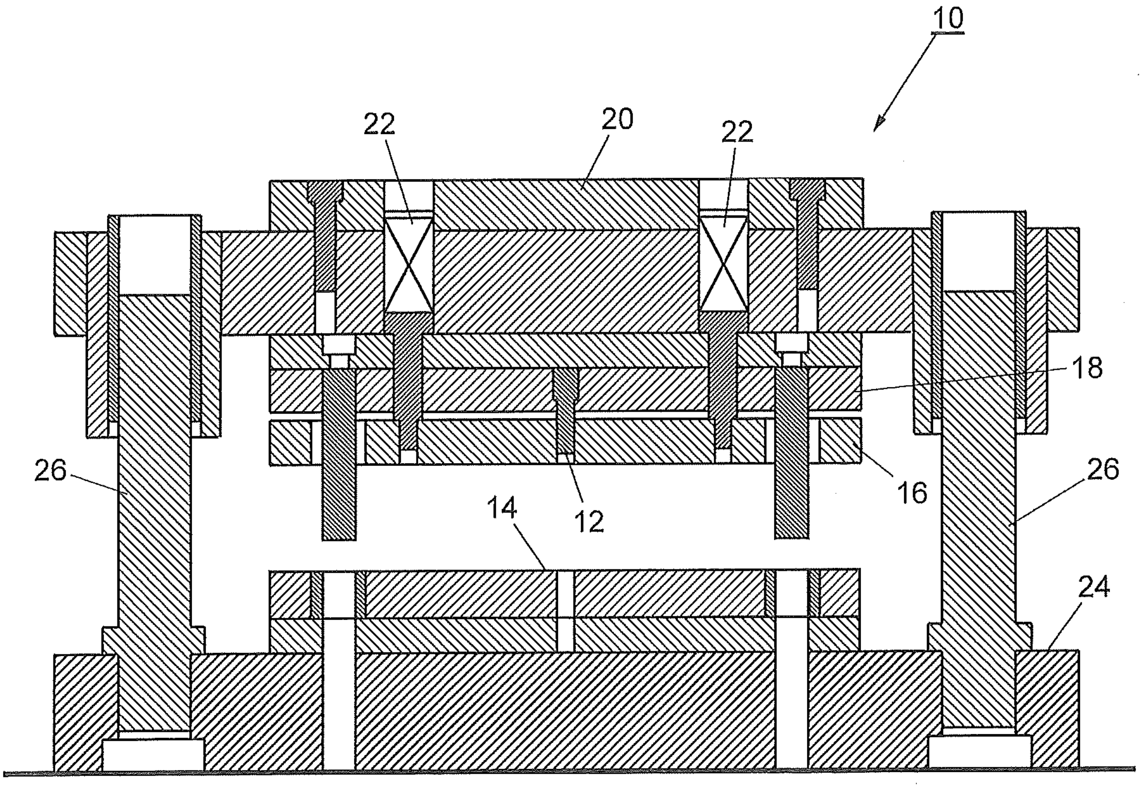
10
22
20
22
18
26
16
26
14
12
24

[Fig.3]

(a)

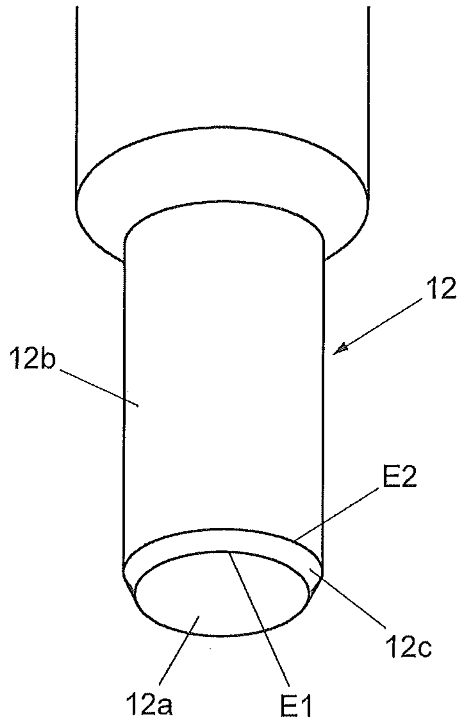


(b)

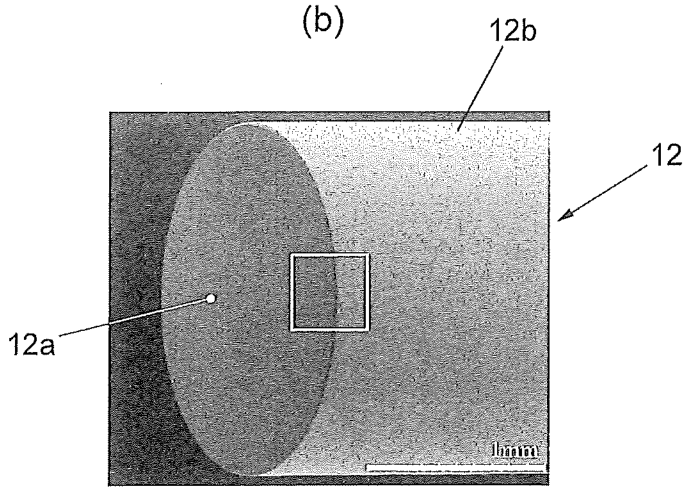

[Fig.4]

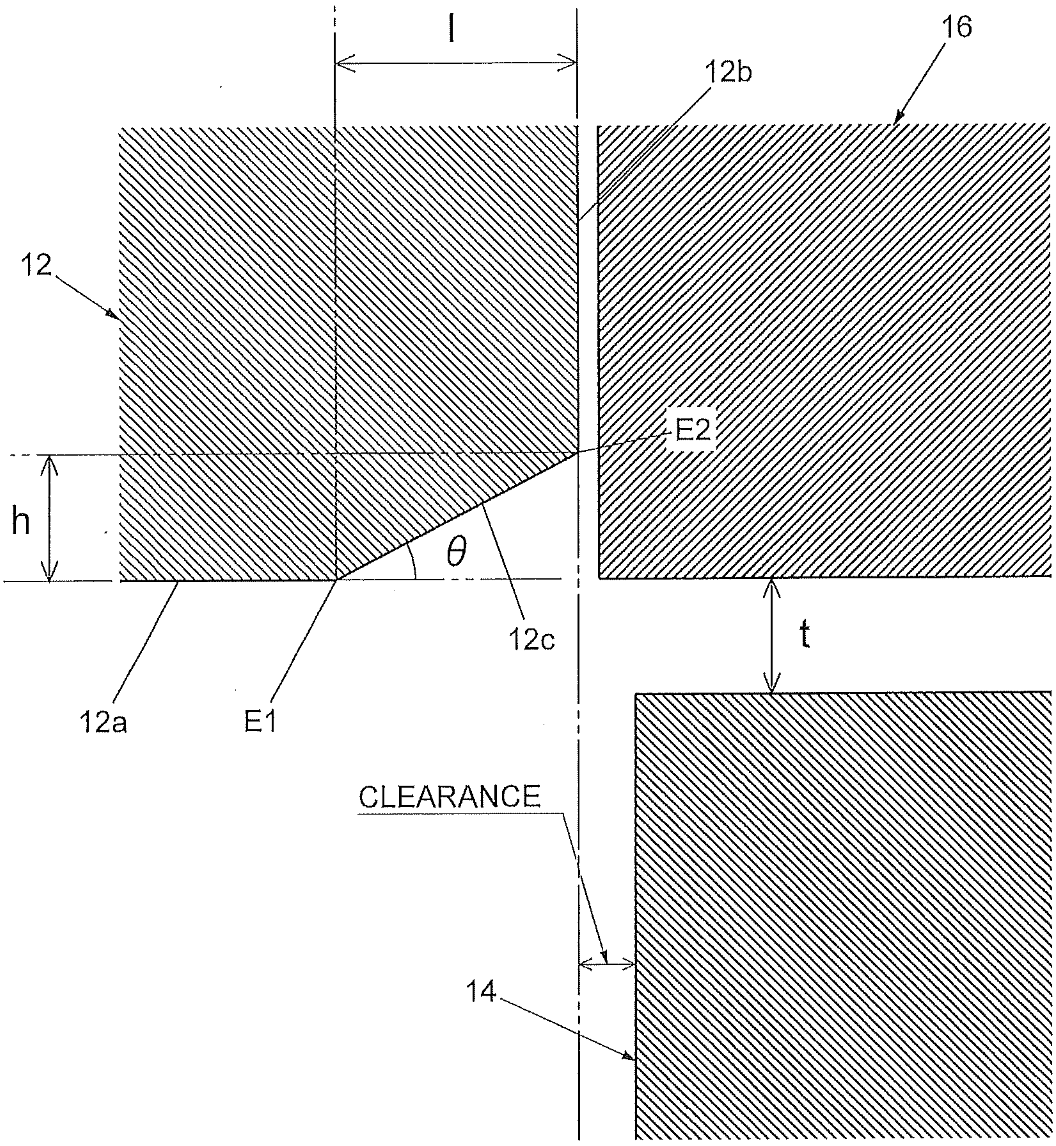

[Fig.5]

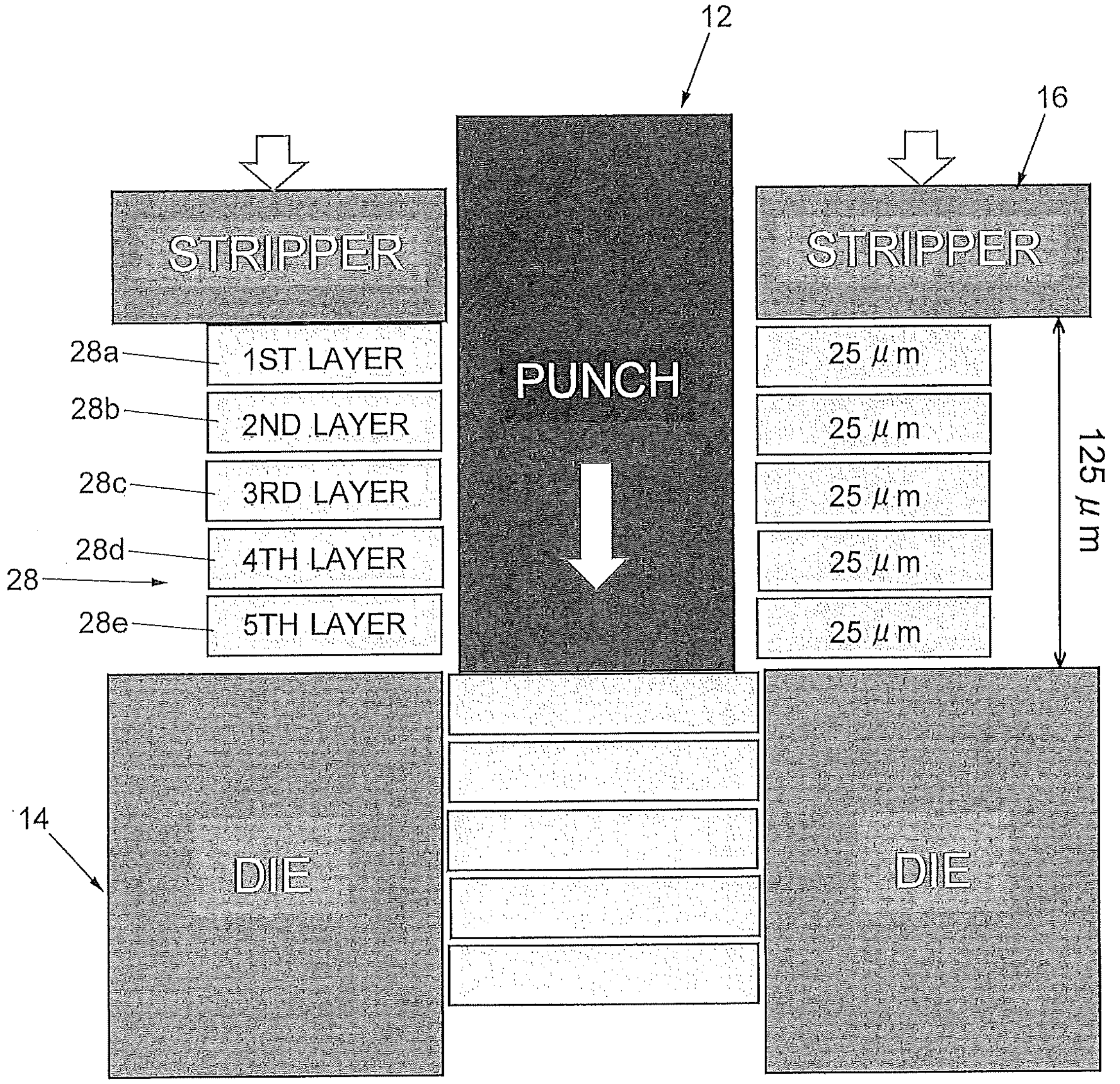
12
16
STRIPPER
STRIPPER
PUNCH
28a
28b
28c
28d
28
28e
1ST LAYER
2ND LAYER
3RD LAYER
4TH LAYER
5TH LAYER
25 μm
25 μm
25 μm
25 μm
25 μm
125 μm
14
DIE
DIE

[Fig.6]

| PUNCH TYPE | l | h | θ |
|---|---|---|---|
| PUNCH (1) (EDGE PUNCH) | 0 | 0 | 90 |
| PUNCH (2) | 0.010 | 0.010 | 45 |
| PUNCH (3) | 0.025 | 0.025 | 45 |
| PUNCH (4) | 0.050 | 0.050 | 45 |
| PUNCH (5) | 0.125 | 0.125 | 45 |
| PUNCH (6) | 0.050 | 0.013 | 15 |

[Fig. 7]

PUNCH (1)

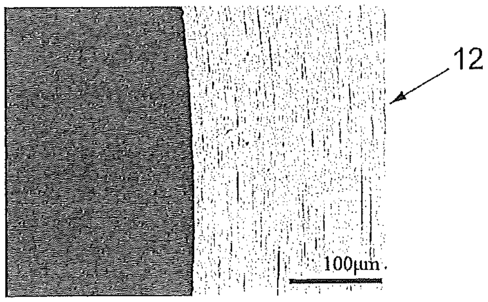


EDGE PUNCH

* BEFORE USE

PUNCH (2)

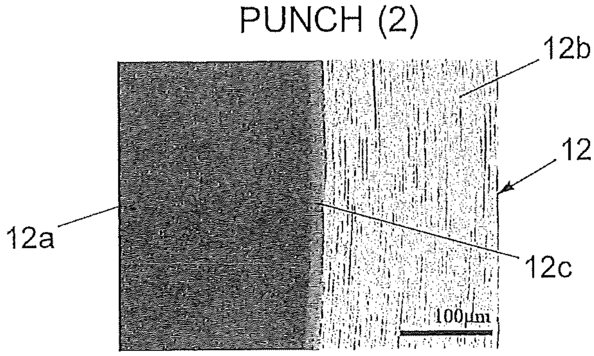


l&h=0.010mm, θ =45 DEG.

* BEFORE USE

PUNCH (3)

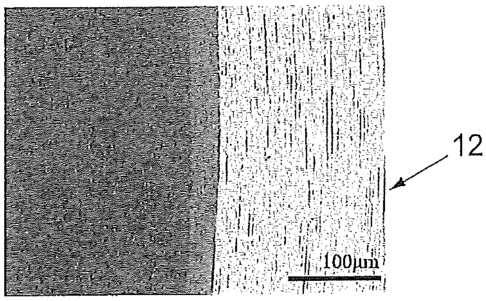


l&h=0.025mm, θ =45 DEG.

* BEFORE USE

PUNCH (4)

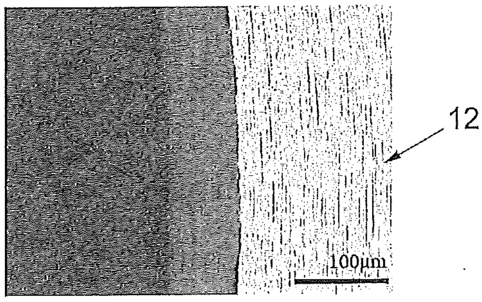


l&h=0.050mm, θ =45 DEG.

* BEFORE USE

12a

PUNCH (5)

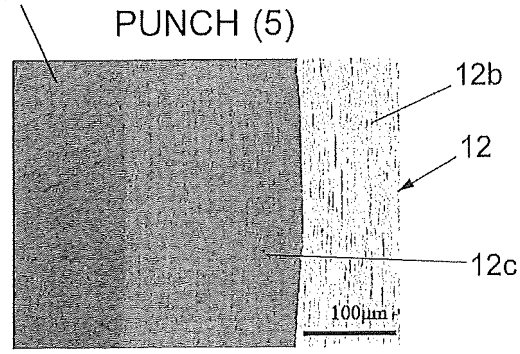


l&h=0.125mm, θ =45 DEG.

* BEFORE USE

PUNCH (6)

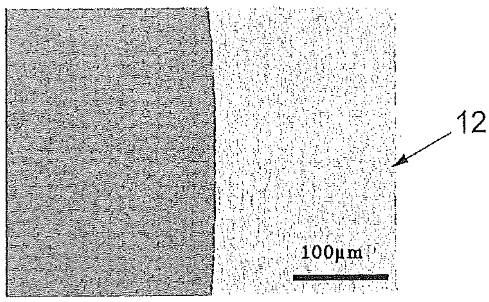


l=0.050mm, h=0.013mm, θ =15 DEG.

* BEFORE USE

[Fig.8]

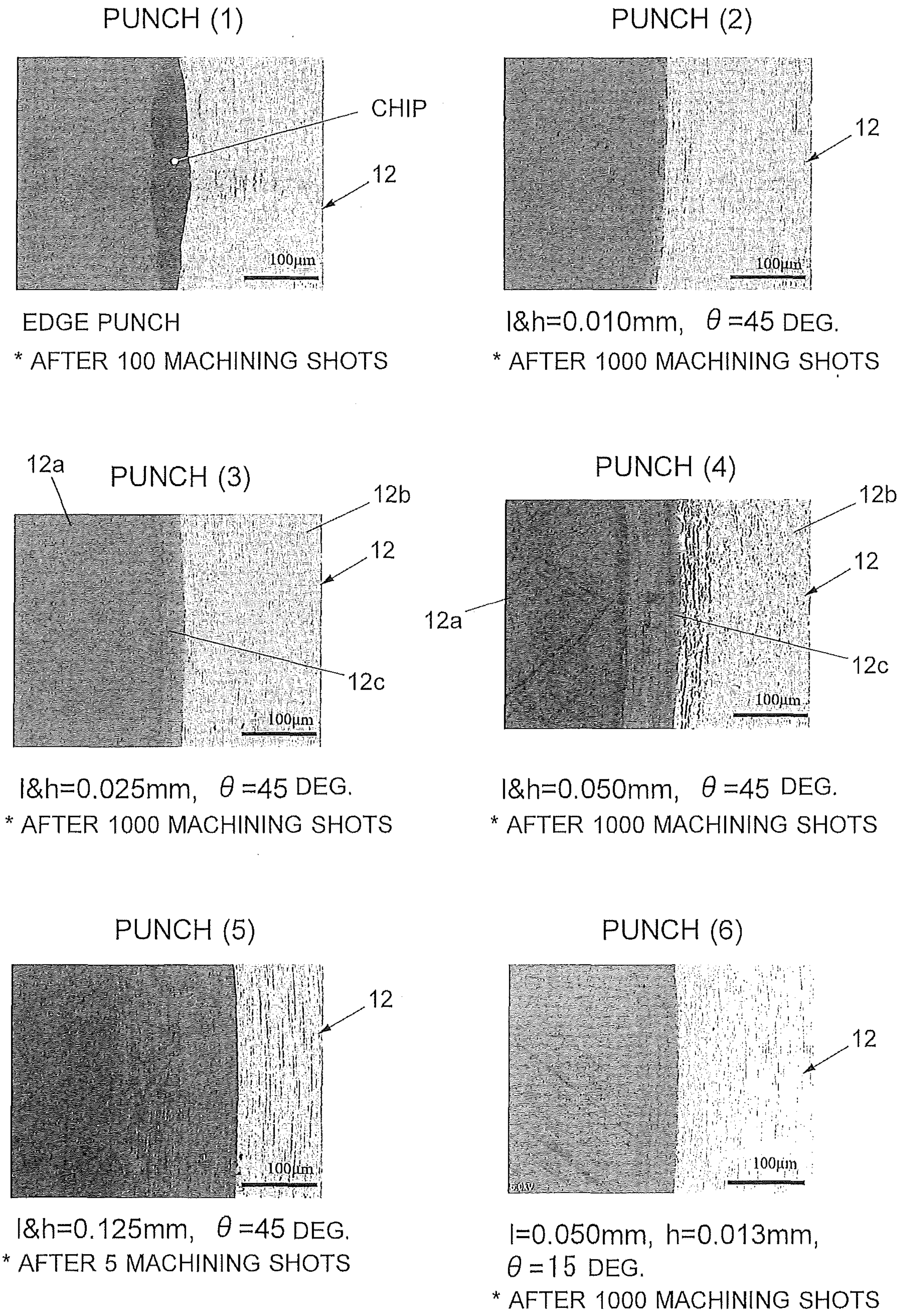
PUNCH (1)
CHIP
12
100μm
EDGE PUNCH
* AFTER 100 MACHINING SHOTS
PUNCH (2)
12
100μm
l&h=0.010mm, θ =45 DEG.
* AFTER 1000 MACHINING SHOTS
12a
PUNCH (3)
12b
12
12c
100μm
l&h=0.025mm, θ =45 DEG.
* AFTER 1000 MACHINING SHOTS
PUNCH (4)
12b
12
12a
12c
100μm
l&h=0.050mm, θ =45 DEG.
* AFTER 1000 MACHINING SHOTS
PUNCH (5)
12
100μm
l&h=0.125mm, θ =45 DEG.
* AFTER 5 MACHINING SHOTS
PUNCH (6)
12
100μm
l=0.050mm, h=0.013mm,
θ =15 DEG.
* AFTER 1000 MACHINING SHOTS

[Fig. 9]

PUNCH (2)

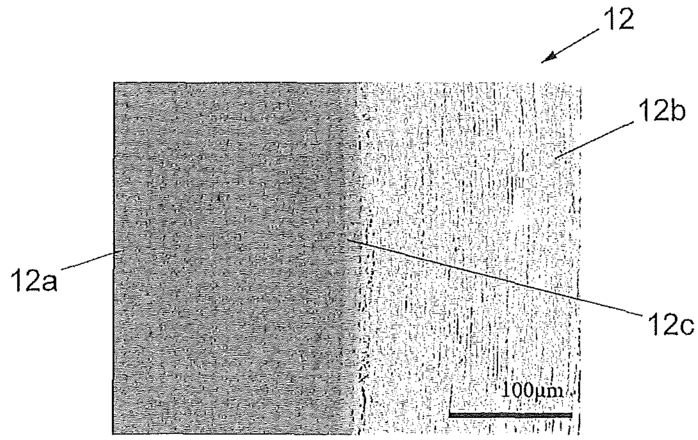


l&h=0.010mm, $\theta$ =45 DEG.

* AFTER 50,000 MACHINING SHOTS

[Fig. 10]

[ PUNCH (2) ]

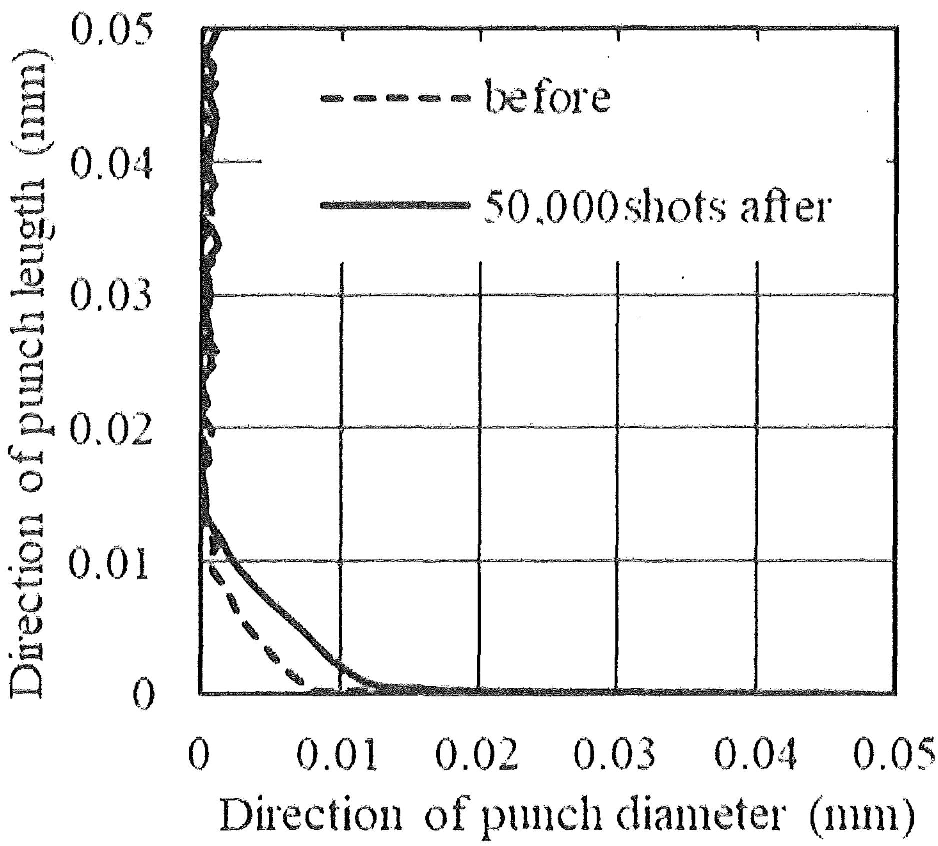

[Fig. 11]

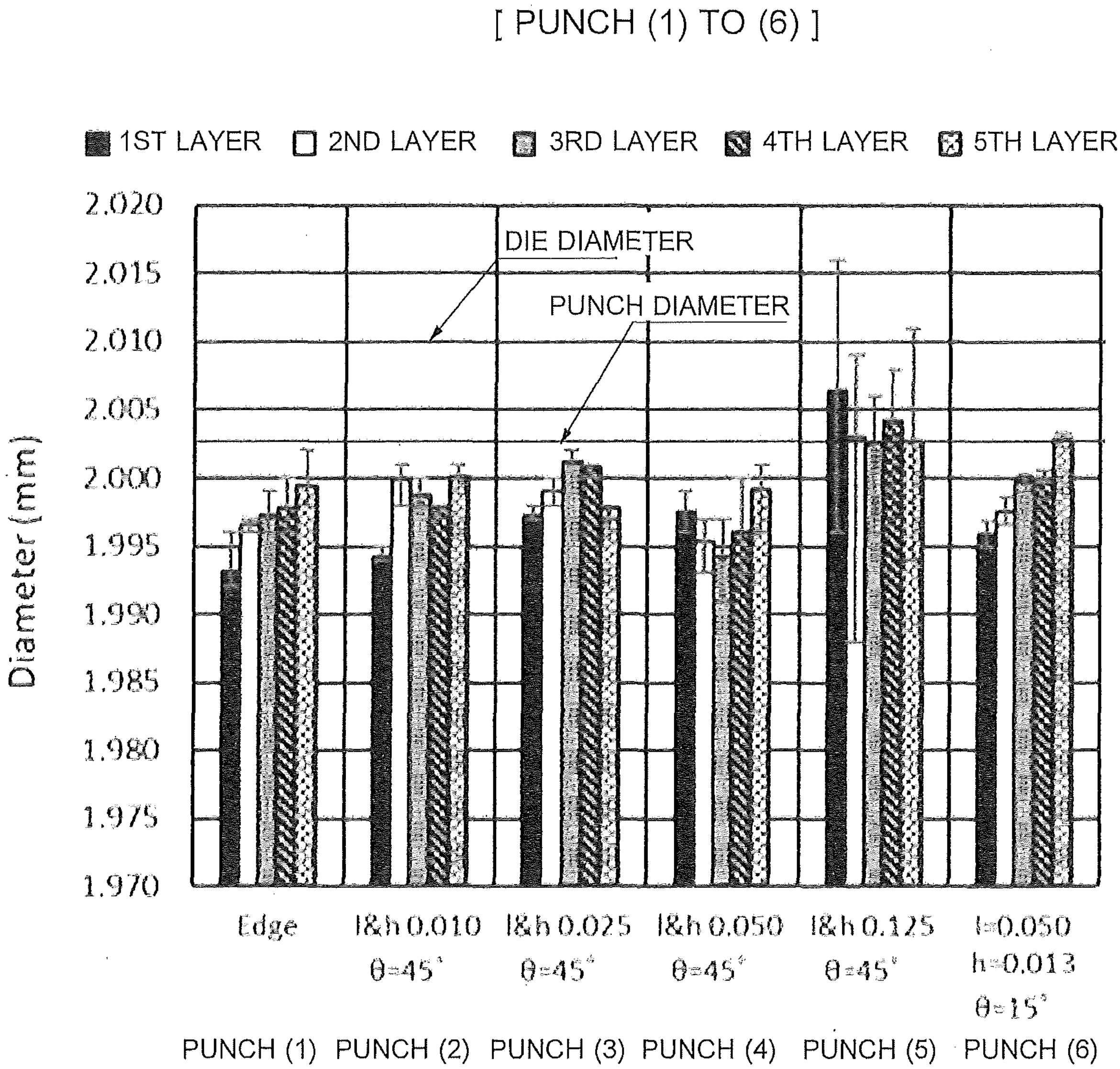
[ PUNCH (1) TO (6) ]
1ST LAYER
2ND LAYER
3RD LAYER
4TH LAYER
5TH LAYER
DIE DIAMETER
PUNCH DIAMETER
Diameter (mm)
2.020
2.015
2.010
2.005
2.000
1.995
1.990
1.985
1.980
1.975
1.970
Edge
l&h 0.010 θ=45°
l&h 0.025 θ=45°
l&h 0.050 θ=45°
l&h 0.125 θ=45°
l=0.050 h=0.013 θ=15°
PUNCH (1)
PUNCH (2)
PUNCH (3)
PUNCH (4)
PUNCH (5)
PUNCH (6)

[Fig. 12]

[ PUNCH (2) ]

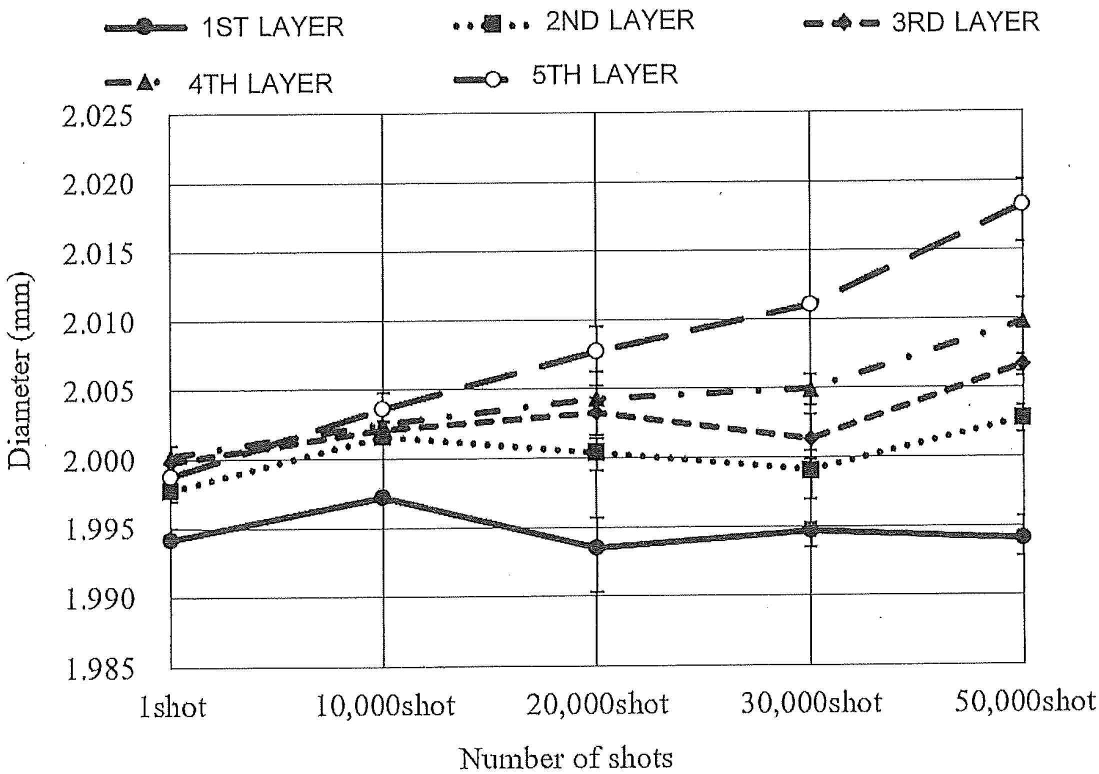


[Fig. 13]

| PUNCH (1) | PUNCH (2) | PUNCH (3) | PUNCH (4) | PUNCH (5) | PUNCH (6) |
|---|---|---|---|---|---|
| EDGE | l&h=0.010mm θ=45DEG. | l&h=0.025mm θ=45DEG. | l&h=0.050mm θ=45DEG. | l&h=0.125mm θ=45DEG. | l=0.050mm h=0.013mm θ=15DEG. |
| 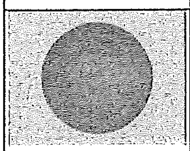 | 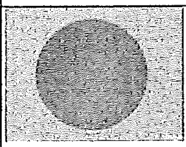 | 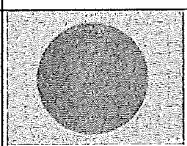 | 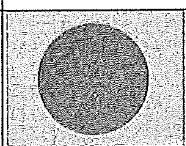 | 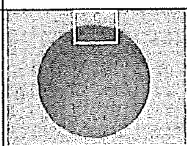 | 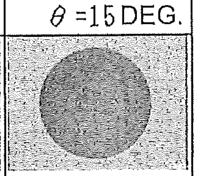 |
| | | | | 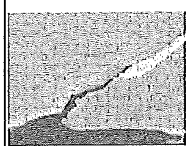 | |

[Fig. 14]

| PUNCH (1) | PUNCH (2) | PUNCH (3) | PUNCH (4) | PUNCH (5) | PUNCH (6) |
|---|---|---|---|---|---|
| EDGE | l&h=0.010mm θ=45 DEG. | l&h=0.025mm θ=45 DEG. | l&h=0.050mm θ=45 DEG. | l&h=0.125mm θ=45 DEG. | l=0.050mm h=0.013mm θ=15 DEG. |

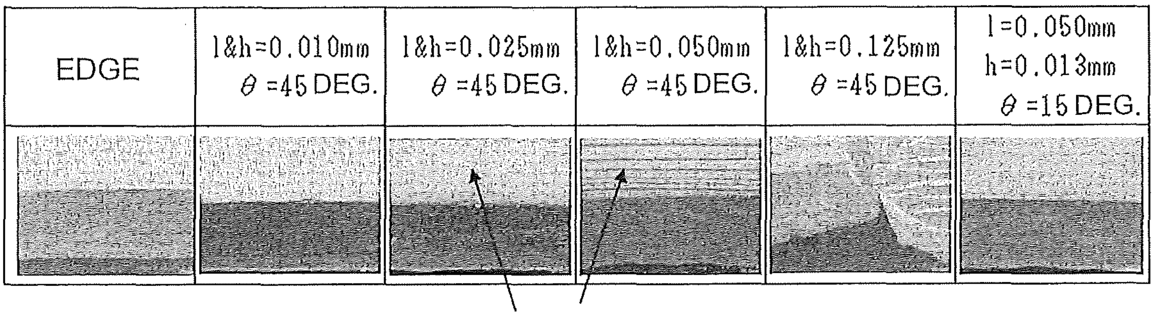

Cracks due to tension have occurred in circumferential direction.

[Fig. 15]

| PUNCH (1) | PUNCH (2) | PUNCH (3) | PUNCH (4) | PUNCH (5) | PUNCH (6) |
|---|---|---|---|---|---|
| EDGE | l&h=0.010mm θ=45 DEG. | l&h=0.025mm θ=45 DEG. | l&h=0.050mm θ=45 DEG. | l&h=0.125mm θ=45 DEG. | l=0.050mm h=0.013mm θ=15 DEG. |

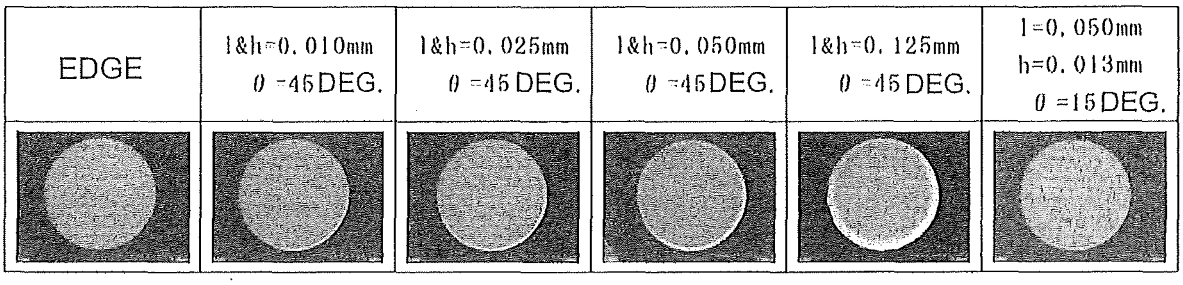

[Fig. 16]

| PUNCH (1) | PUNCH (2) | PUNCH (3) | PUNCH (4) | PUNCH (5) | PUNCH (6) |
|---|---|---|---|---|---|
| EDGE | l&h=0.010mm θ=45 DEG. | l&h=0.025mm θ=45 DEG. | l&h=0.050mm θ=45 DEG. | l&h=0.125mm θ=45 DEG. | l=0.050mm h=0.013mm θ=15 DEG. |

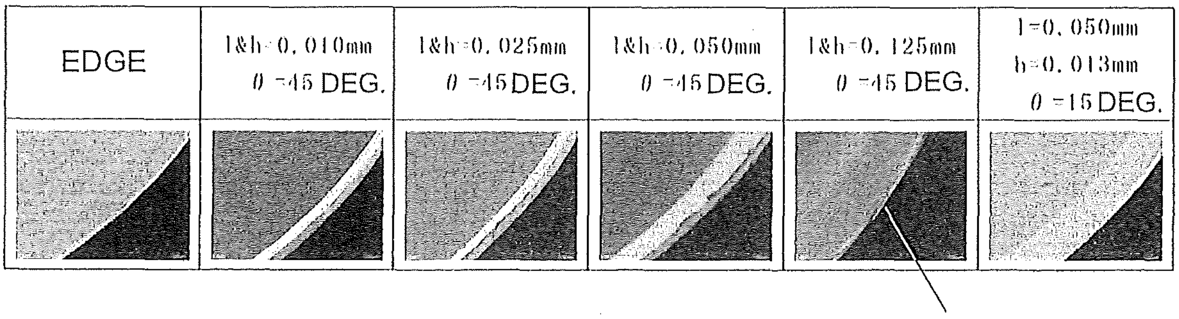

CRACK

[Fig. 17]

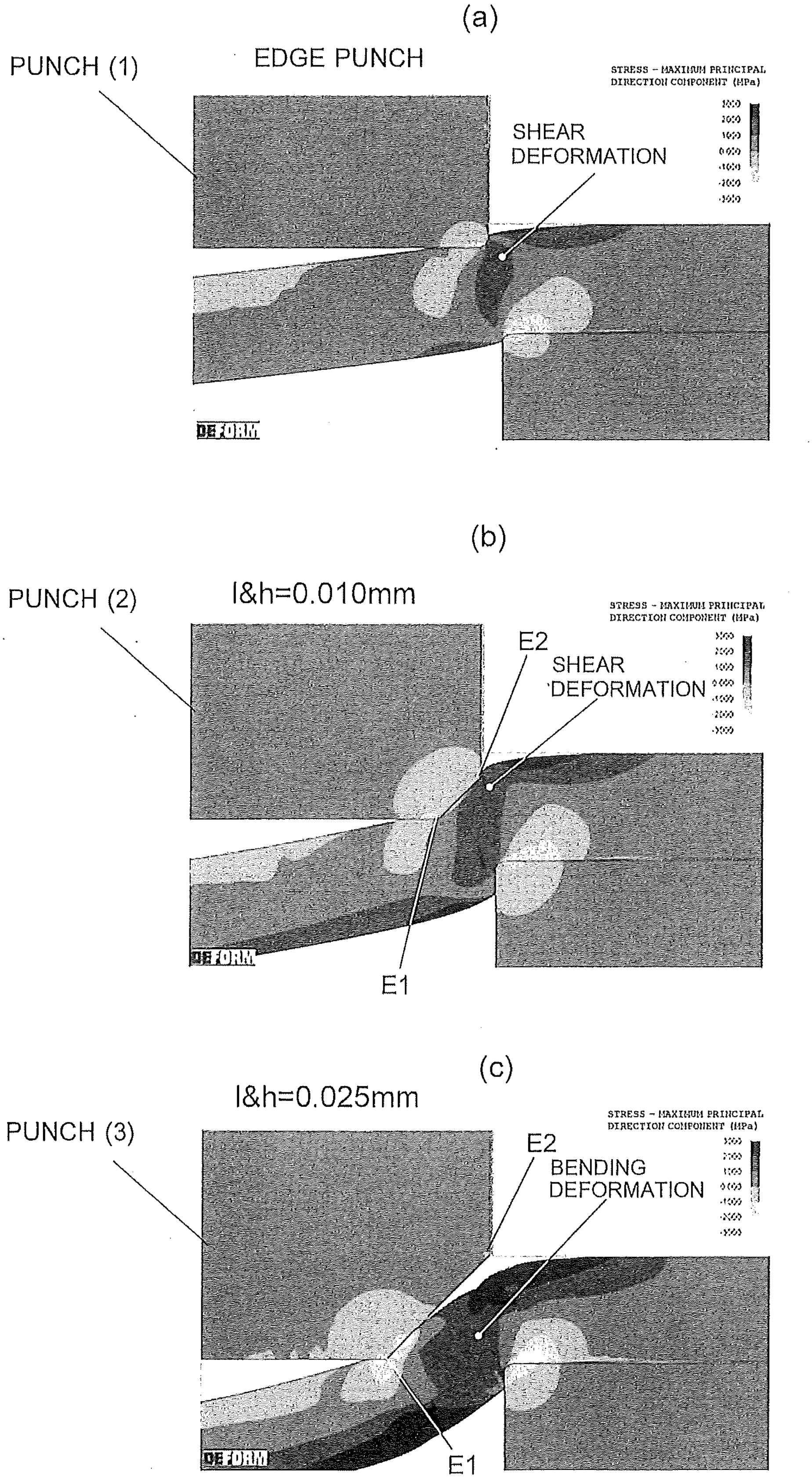
(a)
PUNCH (1)
EDGE PUNCH
STRESS - MAXIMUM PRINCIPAL DIRECTION COMPONENT (MPa)
SHEAR DEFORMATION
(b)
PUNCH (2)
l&h=0.010mm
STRESS - MAXIMUM PRINCIPAL DIRECTION COMPONENT (MPa)
E2
SHEAR DEFORMATION
E1
(c)
l&h=0.025mm
PUNCH (3)
STRESS - MAXIMUM PRINCIPAL DIRECTION COMPONENT (MPa)
E2
BENDING DEFORMATION
E1

[Fig. 18]

(a)

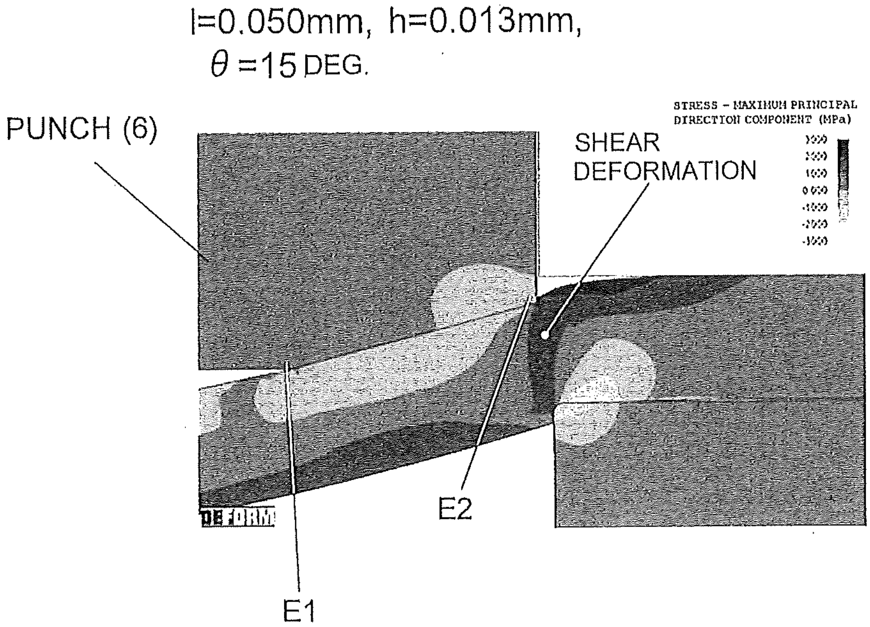
l=0.050mm, h=0.013mm,
θ=15 DEG.
PUNCH (6)
SHEAR
DEFORMATION
STRESS - MAXIMUM PRINCIPAL
DIRECTION COMPONENT (MPa)
E2
E1

(b)

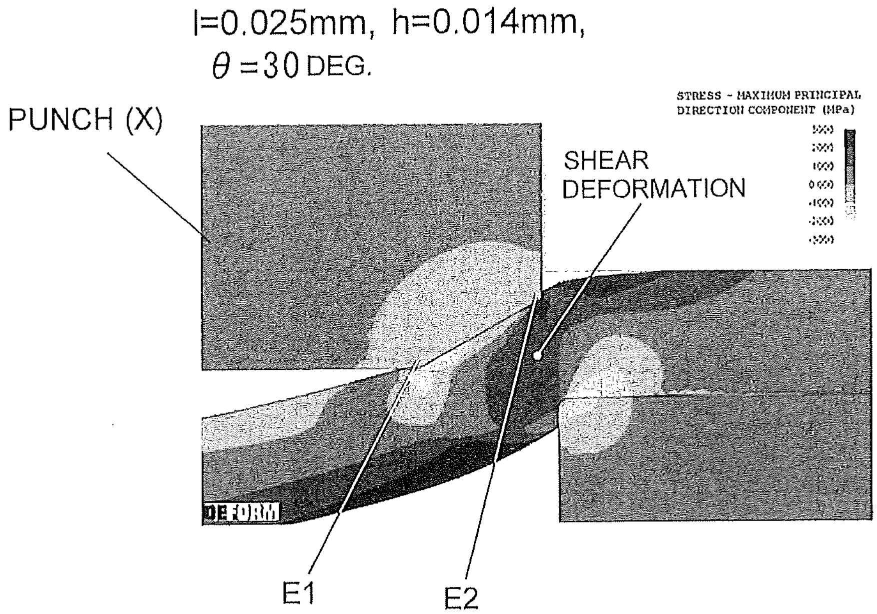
l=0.025mm, h=0.014mm,
θ=30 DEG.
PUNCH (X)
SHEAR
DEFORMATION
STRESS - MAXIMUM PRINCIPAL
DIRECTION COMPONENT (MPa)
E1
E2

**INTERNATIONAL SEARCH REPORT**

International application No.
**PCT/JP2022/043666**

**A. CLASSIFICATION OF SUBJECT MATTER**

***B21D 28/02***(2006.01)i; ***B21D 28/14***(2006.01)i; ***B21D 28/34***(2006.01)i; ***B21D 33/00***(2006.01)i; ***B26F 1/14***(2006.01)i; ***B28D 1/32***(2006.01)i
FI: B21D28/02 Z; B21D28/02 C; B21D28/14 A; B21D28/34 C; B21D33/00; B26F1/14 A; B28D1/32

According to International Patent Classification (IPC) or to both national classification and IPC

**B. FIELDS SEARCHED**

Minimum documentation searched (classification system followed by classification symbols)

B21D28/02; B21D28/14; B21D28/34; B21D33/00; B26F1/14; B28D1/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-097047 A (PANASONIC IP MANAGEMENT CORP.) 25 June 2020 (2020-06-25) paragraphs [0007]-[0075], fig. 1-4 | 1 |
| A | JP 2015-193043 A (TOA TANKOSHO KK) 05 November 2015 (2015-11-05) paragraphs [0002]-[0004], [0023], [0037], fig. 1 | 1 |
| A | WO 2015/170707 A1 (NIPPON STEEL & SUMITOMO METAL CORP.) 12 November 2015 (2015-11-12) paragraphs [0053]-[0070], fig. 7-10 | 1 |
| A | JP 2020-192583 A (PANASONIC IP MANAGEMENT CORP.) 03 December 2020 (2020-12-03) paragraphs [0019]-[0091], fig. 1-4 | 1 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/043666**

| Patent document cited in search report | Publication date (day/month/year) | Patent family member(s) | Publication date (day/month/year) |
|---|---|---|---|
| JP 2020-097047 A | 25 June 2020 | (Family: none) | |
| JP 2015-193043 A | 05 November 2015 | EP 2926921 A2<br>paragraphs [0002]-[0004], [0034]-[0038], [0065]-[0066], fig. 1<br>TW 201607637 A | |
| WO 2015/170707 A1 | 12 November 2015 | US 2017/0080475 A1<br>paragraphs [0111]-[0138], fig. 7-10<br>KR 10-2016-0143759 A<br>CN 106457348 A<br>MX 2016014447 A | |
| JP 2020-192583 A | 03 December 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013013901 A
- JP 53008388 B
- JP H857557 B
- JP H10323723 B


### Non-patent literature cited in the description


- **R. TILSLEY**. *Machinery*, vol. 93-2383 (1953-7), 151
- **TSUYOSHI MASUMOTO**. *Materials Science of Amorphous Metals*, 1982, 203